# EUROPÄISCHE PATENTANMELDUNG

(11) **EP 2 199 146 A1**
(43) Veröffentlichungstag der Anmeldung: **23.06.2010**
(21) Anmeldenummer: 09176660.0
(22) Anmeldetag: 20.11.2009
(51) Int. Cl.: B60N 2/48

(54) **Stufenlos höhenverstellbare Kopfstütze**

(30) Priorität: 18.12.2008 DE 202008016755 U
(71) Anmelder: FERDINAND LUSCH GMBH & CO. KG., 33649 Bielefeld (DE)
(72) Erfinder:
(74) Vertreter: Cohausz & Florack

(57) **Zusammenfassung**

Die vorliegende Erfindung betrifft eine stufenlos höhenverstellbare Kopfstütze, die verschiebbar an einer Rückenlehne eines Sitzes gehalten ist, mit mindestens einer, in einem Halter 2 der Rückenlehne axial verschiebbar gelagerten Stange 3 und einer Klemmeinrichtung 7 zur Festsetzung der Kopfstütze gegenüber dem Halter 2. Die erfindungsgemäße stufenlos höhenverstellbare Kopfstütze lässt sich konstruktiv einfachst aufbauen, ist kostengünstig herstellbar und dauerhaft funktionsfähig. Dies wird erfindungsgemäß dadurch erreicht, dass die an der Stange 3 befestigte Klemmeinrichtung 7 zwei, in Verschieberichtung der Kopfstütze hintereinander liegende, gegenüber der Stange 3 ortsfeste Umlenkrollen aufweist, um die ein Band 6 straff und mäandrierend geführt ist, das sich im Übrigen parallel zur Stange 3 erstreckt und am Halter 2 eingespannt ist und an dem ein federbelasteter, quer zur Verschieberichtung der Kopfstütze bewegbarer Spannbolzen 11 anliegt, wobei zwei gegenläufige Teilbereiche des umgelenkten Bandes 6, abhängig vom Druck des Spannbolzens 11, reibend aneinander liegen.

## Beschreibung

Die Erfindung betrifft eine stufenlos höhenverstellbare Kopfstütze nach dem Oberbegriff des Anspruchs 1.

Derartige Kopfstützen kommen an unterschiedlichen Sitzen zum Einsatz, beispielsweise einem Fahrzeugsitz oder einem Sessel, wobei die Kopfstütze üblicherweise an zwei parallel und abständig zueinander verlaufenden Stangen befestigt ist, die längs verschiebbar in einem Halter der Rückenlehne des Sitzes geführt sind.

Um die Kopfstütze einerseits sicher in der jeweiligen, den unterschiedlichen Bedürfnissen der Benutzer angepassten Position nach einem Verschieben zu halten, sind Klemmeinrichtungen bekannt, die mit den Stangen in Eingriff stehen und die durch Reibschluss eine Klemmwirkung erzielen, wobei die Reibschlussmittel Gummirollen sein können, die federbelastet an zumindest einer der Stangen anliegen.

Problematisch gestaltet sich die Funktion dieser bekannten Konstruktion im Dauerbetrieb, da an den Stangen anhaftender Schmutz von den Gummirollen abgenommen bzw. verfestigt wird, so dass die Funktionsfähigkeit dieser Klemmeinrichtung nicht in dem gewünschten und erforderlichen Maße gewährleistet ist.

Andere stufenlos verstellbare Kopfstützen sind mit Klemmeinrichtungen feststellbar, die konstruktiv äußerst kompliziert aufgebaut sind, wie beispielsweise in der DE 198 09 078 A1 offenbart.

Neben den hohen Herstellungskosten einer solchen Klemmeinrichtung ist auch deren Standzeit aufgrund der Vielzahl der miteinander korrespondierenden Einzelteile nicht in dem gewünschten Maße gegeben.

Neben diesen gattungsgemäßen Kopfstützen sind auch solche bekannt, die mittels einer Verrastungsmechanik in unterschiedlichen Stellungen gehalten werden. Allerdings ist damit eine stufenlose Verstellung nicht möglich, wodurch naturgemäß die Benutzungsfreundlichkeit herabgesetzt ist.

Der Erfindung liegt die Aufgabe zugrunde, eine Kopfstütze der gattungsgemäßen Art so weiterzuentwickeln, dass sie konstruktiv einfachst aufgebaut ist, kostengünstig herstellbar und dauerhaft funktionsfähig ist.

Diese Aufgabe wird durch eine Kopfstütze mit den Merkmalen des Anspruchs 1 gelöst.

Eine in diesem Sinne ausgebildete Kopfstütze zeichnet sich zunächst einmal durch ihren äußerst einfachen Aufbau aus, der eine kostengünstige Herstellung ermöglicht.

Darüber hinaus ist die neue Kopfstütze äußerst robust und in ihrer Funktionsfähigkeit dauerhafter als dies bei den bekannten Kopfstützen der Fall ist.

Dabei ist die Verstellung der Kopfstütze mit geringem Kraftaufwand möglich und zwar sowohl in Auszieh- wie auch in Einschubrichtung. Die Klemmwirkung tritt quasi unmittelbar nach Abschluss der Verstellbewegung ein und zwar ohne Betätigung irgendwelcher Bedienelemente, d.h., die klemmende Festsetzung der Kopfstütze erfolgt praktisch automatisch.

Nach einer vorteilhaften Weiterbildung der Erfindung ist vorgesehen, dass die Umlenkrollen ebenso wie der Spannbolzen in einem fest mit der Stange verbundenen Gehäuse positioniert sind, wobei das Band, bezogen auf die Kopfstütze, ober- und unterseitig durch die Gehäusewandung geführt ist.

Die Befestigung des Bandes erfolgt an einem Tragteil des Halters einerseits und gegenüberliegend an einer Spannstange, die fest mit dem Tragteil verbunden ist.

Während die Umlenkrollen, die in Verschieberichtung abständig zueinander angeordnet sind, gegenüber der Stange ortsfest sind, durch Anschluss an das Gehäuse der Klemmeinrichtung, ist der Spannbolzen quer zur Verschieberichtung der Stange bewegbar, wobei zur Anlage des Bandes am Spannbolzen eine Druckfeder angeordnet ist, mit der der Spannbolzen gegen das Band drückbar ist.

Um diese Querbewegung zu ermöglichen, ist der Spannbolzen im Gehäuse entsprechend gelagert, während sich die Druckfeder mit ihrem dem Spannbolzen abgewandten Ende am Gehäuse oder einem Gehäuseteil abstützt. Bevorzugt kann der Spannbolzen an einer Wippe befestigt sein, die schwenkbar an der Gehäusewandung gelagert ist.

Weitere vorteilhafte Ausbildungen der Erfindung sind in den Unteransprüchen gekennzeichnet.

Ein Ausführungsbeispiel der Erfindung sowie die Funktionsweise der Klemmeinrichtung werden nachfolgend anhand der beigefügten Zeichnungen beschrieben.

Es zeigen:
- Fig. 1: einen Teil einer erfindungsgemäßen Kopfstütze in einer Vorderansicht;
- Fig. 2: den Teil nach Figur 1 in einer Seitenansicht;
- Fig. 3 und 4: eine Einzelheit der Erfindung gemäß dem Ausschnitt X in Figur 2 in verschiedenen Funktionsstellungen, jeweils in einem Längsschnitt.

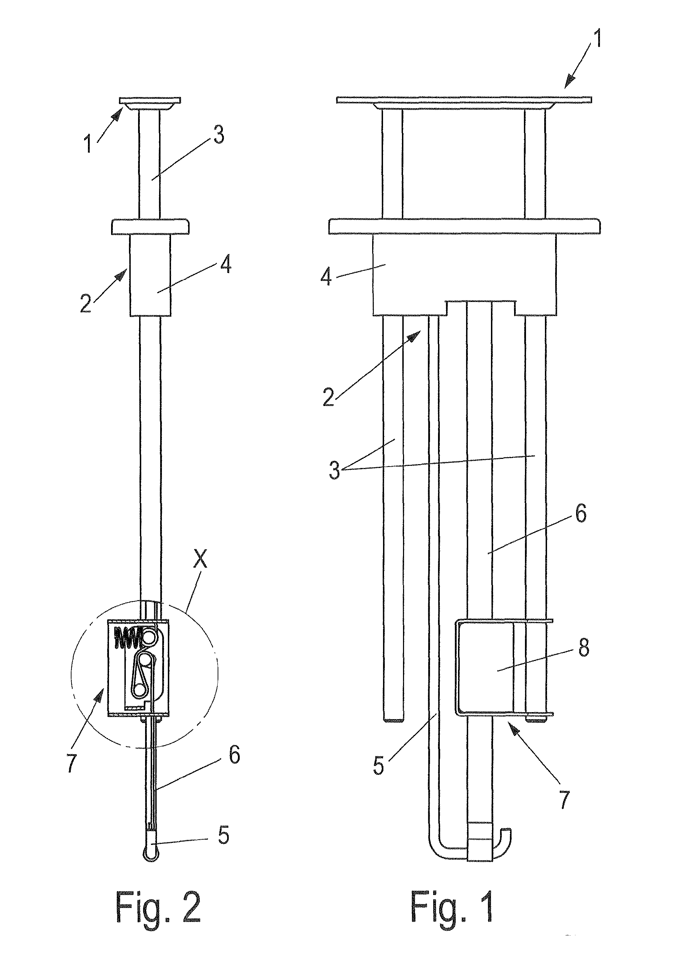

In den Figuren 1 und 2 ist ein Teil einer stufenlos höhenverstellbaren Kopfstütze dargestellt, die verschiebbar an einer Rückenlehne eines Sitzes gehalten wird. In den Figuren 1 und 2 sind lediglich die zur Erklärung der Erfindung notwendigen Funktionsteile dargestellt.

Die nicht gezeigte Kopfstütze ist an einem Träger 1 befestigt, der über zwei parallel und abständig zueinander angeordnete angeschlossene Stangen 3 in einem Halter 2 höhenverstellbar geführt ist, wobei der Halter 2 im Innern einer ebenfalls nicht gezeigten Rückenlehne installiert ist.

Der Halter 2 besteht aus einem Tragteil 4, das die Führung für die Stangen 3 bildet, sowie einer sich parallel zu den Stangen 3 erstreckenden Spannstange 5, die mit dem Tragteil 4 fest verbunden ist und in die dem Träger 1 abgewandte Richtung weist.

Die Spannstange 5 ist an ihrem dem Tragteil 4 abgewandten Ende abgewinkelt und dient der Anbindung eines Bandes 6, das andererseits mit dem Tragteil 4 verspannt ist und sich parallel zur Spannstange 5 bzw. den Stangen 3 erstreckt.

An dem dem Träger 1 gegenüberliegenden Ende der einen Stange 3 ist eine Klemmeinrichtung 7 befestigt, die mit dem Band 6 in Funktionsverbindung steht.

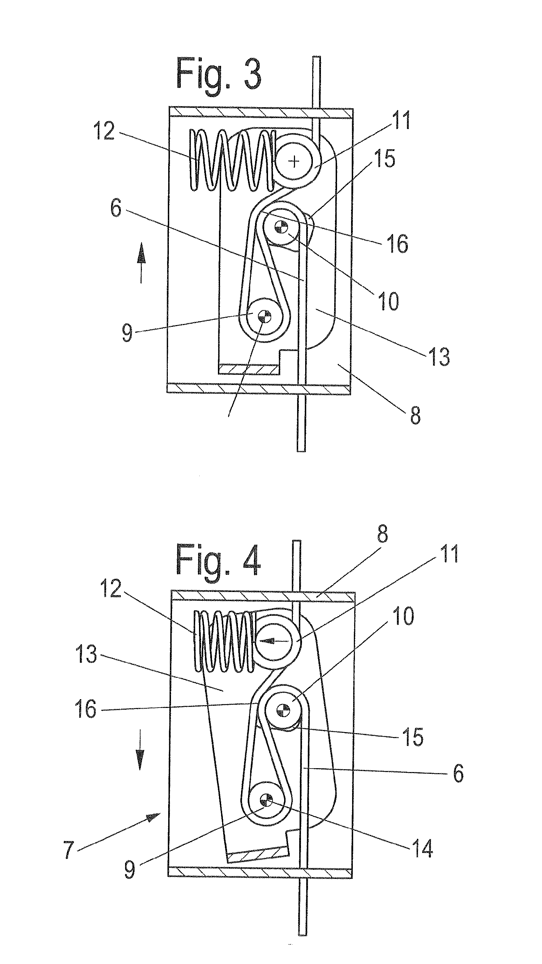

Die Funktion der Klemmeinrichtung wird in den Figuren 3 und 4 sehr deutlich.

Wie zu erkennen ist, sind in einem Gehäuse 8 zwei in Verschieberichtung der Stangen, die durch die Pfeile kenntlich gemacht ist, untereinander liegende Umlenkrollen 9, 10 ortsfest in dem an der Stange 3 festgehaltenen Gehäuse 8 abständig zueinander angeordnet, über die das Band 6 straff und unter Schleifenbildung geführt ist. Zum Durchlass des Bandes 6 sind in den sich gegenüberliegenden Wänden des Gehäuses 8 entsprechende, nicht erkennbare Schlitze vorgesehen.

In Richtung des Tragteiles 4 gesehen, oberhalb der beiden Umlenkrollen 9,10 ist ein quer zur Verschieberichtung der Stange 3 federbelastet bewegbarer Spannbolzen 11 vorgesehen, der an dem Band 6 anliegt und zwar in Richtung des Tragteiles 4 gesehen oberhalb der Umlenkrollen 9, 10.

Der Spannbolzen 11 ist an einer Wippe 13 befestigt, die im Bereich einer Achse 14, die gleichzeitig der Befestigung einer der Umlenkrollen 9, 10 dient, schwenkbar am Gehäuse 8 festgelegt. Eine auf den Spannbolzen 11 wirkende Druckfeder 12 stützt sich einerseits an einem Gehäuseteil ab und andererseits auf der dem Band 6 gegenüberliegenden Seite am Spannbolzen 11.

In der Figur 3 ist eine Position der Klemmeinrichtung 7 gezeigt, in der die Kopfstütze aus der Rückenlehne herausgezogen wird. Dabei wird durch Zug an der Stange 3 in Richtung des Pfeiles das Band 6 oberhalb der oberen Umlenkrolle 10 so weit entlastet, dass sich die Druckfeder 12 entspannen kann, d.h., der Spannbolzen 11 ist gegenüber dem Band 6 unwirksam.

Dadurch wird ein Reibschluss aufgehoben bzw. minimiert, der durch die Umlenkung des Bandes 6 innerhalb einer Reibfläche 16 entsteht, bei der die dem Spannbolzen 11 zugewandte Umlenkrolle 10 ein Widerlager bildet, wobei das Band 6 mäandrierend, ausgehend von der oberen Umlenkrolle 10 über die untere Rolle 9, entlang der Reibfläche 16 in Richtung der in der Figur 3 nicht dargestellten, jedoch rechts vom Gehäuse 8 positionierten Stange gelenkt wird. Im weiteren Verlauf in Richtung des Tragteiles 4 ist das Band 6, wie erwähnt, entspannt. Durch die weitgehende Aufhebung des Reibschlusses im gemeinsamen, eine Aufdopplung darstellenden Überdeckungsbereich mit der oberen Umlenkrolle 10 kann die Kopfstütze quasi klemmfrei nach oben verschoben werden.

Trotzdem ist die Kopfstütze in jeder möglichen, stufenlos einstellbaren Position gehalten, insbesondere, da bei einem Niederdrücken der Kopfstütze, d.h. einem Einschieben in Richtung der Rückenlehne das Band 6 in seiner Gesamtheit gestreckt wird und dabei durch die Spannrolle 11 gehalten wird.

Zum Verschieben der Kopfstütze in Richtung der Rückenlehne, wie dies in der Figur 4 dargestellt und durch die Pfeilrichtung angegeben ist, wird durch die auch durch Druck auf die Stange 3 aufgebrachte Zugkraft auf das Band 6 dies so gestrafft, dass sich eine Querkraft ergibt, die durch den Pfeil im Spannbolzen 11 in der Figur 4 verdeutlich ist und durch die der Spannbolzen 11 gegen die Kraft der Druckfeder 12 in deren Richtung gedrückt wird, wobei die Auslenkung des Spannbolzens 11 durch die Verschwenkung der Wippe 13 erfolgt.

Wie erkennbar wird die Reibfläche 16 durch zwei gegenläufige Teilbereiche des Bandes 6 gebildet, die, abhängig vom Druck des Spannbolzens 11 reibend aneinanderliegen.

Um die Wippe 13 behinderungsfrei verschwenken zu können, ist im Überdeckungsbereich mit der oberen Umlenkrolle 10 eine Ausnehmung 15 vorgesehen, durch die die Umlenkrolle 10 geführt ist.

In der in der Figur 4 gezeigten Stellung des Spannbolzens 11 ist ebenfalls der Reibschluss zwischen den aneinander liegenden Bandteilen im Bereich der Reibfläche 16 so weit minimiert, dass eine problemlose Verschiebung der Kopfstütze in Richtung der Rückenlehne möglich ist.

Im Übrigen sind die Umlenkrollen 9, 10, bezogen auf die Längsachse der Stange 3 versetzt zueinander angeordnet, wobei die obere Umlenkrolle 10 näher zur Stange 3 liegt als die Umlenkrolle 9. Durch das diesbezügliche Abstandsmaß kann die Länge der Reibfläche 16 bestimmt werden.

### Bezugszeichenliste

- 1: Träger
- 2: Halter
- 3: Stange
- 4: Tragteil
- 5: Spannstange
- 6: Band
- 7: Klemmeinrichtung
- 8: Gehäuse
- 9: Umlenkrolle
- 10: Umlenkrolle
- 11: Spannbolzen
- 12: Druckfeder
- 13: Wippe
- 14: Achse
- 15: Ausnehmung
- 16: Reibfläche

## Patentansprüche

1. Stufenlos höhenverstellbare Kopfstütze, die verschiebbar an einer Rückenlehne eines Sitzes gehalten ist, mit mindestens einer, in einem Halter (2) der Rückenlehne axial verschiebbar gelagerten Stange (3) und einer Klemmeinrichtung (7) zur Festsetzung der Kopfstütze gegenüber dem Halter (2),
**dadurch gekennzeichnet, dass**
die an der Stange (3) befestigte Klemmeinrichtung (7) zwei, in Verschieberichtung der Kopfstütze hintereinander liegende, gegenüber der Stange (3) ortsfeste Umlenkrollen aufweist, um die ein Band (6) straff und mäandrierend geführt ist, das sich im Übrigen parallel zur Stange (3) erstreckt und am Halter (2) eingespannt ist und an dem ein federbelasteter, quer zur Verschieberichtung der Kopfstütze bewegbarer Spannbolzen (11) anliegt, wobei zwei gegenläufige Teilbereiche des umgelenkten Bandes (6), abhängig vom Druck des Spannbolzens (11), reibend aneinander liegen.

2. Kopfstütze nach Anspruch 1,
**dadurch gekennzeichnet, dass**
der Halter (2) aus einem Tragteil (4) und einer daran angeschlossenen, sich parallel zur Stange (3) erstreckenden Spannstange (5) besteht, an der das Band (6) mit einem Ende und mit seinem anderen Ende am Tragteil (4) befestigt ist.

3. Kopfstütze nach Anspruch 1 oder 2,
**dadurch gekennzeichnet, dass** das Band (6) durch ein Gehäuse (8) der Klemmeinrichtung (7) geführt ist.

4. Kopfstütze nach einem der vorhergehenden Ansprüche,
**dadurch gekennzeichnet, dass** die Umlenkrollen (9, 10) fest mit der Wandung des an der Stange befestigten Gehäuses (8) verbunden sind.

5. Kopfstütze nach einem der vorhergehenden Ansprüche,
**dadurch gekennzeichnet, dass** der Spannbolzen (11) auf der der Kopfstütze zugewandten Seite oberhalb der Umlenkrolle (10) angeordnet ist.

6. Kopfstütze nach einem der vorhergehenden Ansprüche,
**dadurch gekennzeichnet, dass** die Spannrolle (11) an einer an der Wandung des Gehäuses (8) schwenkbar gelagerten Wippe (13) befestigt ist.

7. Kopfstütze nach einem der vorhergehenden Ansprüche,
**dadurch gekennzeichnet, dass** zur Federbelastung des Spannbolzens (11) eine Druckfeder (12) vorgesehen ist, die auf der der Anlageseite des Bandes (6) gegenüberliegenden Seite des Spannbolzens (11) anliegt und sich andererseits am Gehäuse (8) abstützt.

8. Kopfstütze nach einem der vorhergehenden Ansprüche,
**dadurch gekennzeichnet, dass** der Spannbolzen (11) so gegen das Band (6) gedrückt ist, dass dies in Richtung der Stange zur der Spannrolle (11) zugewandten Umlenkrolle (10) schräg verläuft.

9. Kopfstütze nach einem der vorhergehenden Ansprüche,
**dadurch gekennzeichnet, dass** die hintereinander liegenden Umlenkrollen (9, 10), bezogen auf die Längsachse der Stange (3) abständig zueinander angeordnet sind.

10. Kopfstütze nach einem der vorhergehenden Ansprüche,
**dadurch gekennzeichnet, dass** die dem Spannbolzen (11) zugewandte obere Umlenkrolle (10) näher zur Stange (3) positioniert ist als die nachgeordnete Umlenkrolle (9).
